(19) Europäisches Patentamt
European Patent Office
Office européen des brevets

(11) EP 2 003 180 A1

(12) **EUROPEAN PATENT APPLICATION**

(43) Date of publication:
**17.12.2008 Bulletin 2008/51**

(51) Int Cl.:
**C09J 7/02** [(2006.01)]  **A61B 5/117** [(2006.01)]
**C09J 133/06** [(2006.01)]

(21) Application number: **08158030.0**

(22) Date of filing: **11.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.06.2007 JP 2007155469**

(71) Applicant: **NITTO DENKO CORPORATION**
**Ibaraki-shi, Osaka 567-8680 (JP)**

(72) Inventors:
• **Uesugi, Masanori**
  **Ibaraki-shi Osaka 567-8680 (JP)**
• **Yamanaka, Eiji**
  **Ibaraki-shi Osaka 567-8680 (JP)**

(74) Representative: **TBK-Patent**
**Bavariaring 4-6**
**80336 München (DE)**

(54) **Pressure-sensitive adhesive sheet for identification and production method thereof**

(57) The object of the invention is to provide a pressure-sensitive adhesive sheet for identification, which is obtained by easy thick film coating in formation of a pressure-sensitive adhesive agent layer; which can be used even if the surface of a collection subject is wet with moisture; which is obtained without using an organic solvent in production steps; and which causes few damages on the surface of the collection subject, and a production method thereof. There is provided a pressure-sensitive adhesive sheet for identification which is used by transferring and taking a trace visualized onto a surface of a pressure-sensitive adhesive agent layer, the pressure-sensitive adhesive agent layer being formed by photoirradiation of a layer made of an acryl-based pressure-sensitive adhesive agent composition containing a) a (meth)acrylic acid alkyl ester in which an alkyl group has 1 to 14 carbon atoms on average, as a main monomer, b) a polyfunctional (meth)acrylate and c) a photoinitiator, the pressure-sensitive adhesive agent layer having a gel fraction of 50% by weight or more, the pressure-sensitive adhesive agent layer having an adhesive strength to a stainless steel plate of 0.1 to 2.0 N/20 mm.

[FIG.1]

10 substrate
20 pressure-sensitive adhesive agent layer
31 plastic sheet
32 paper sheet
30 base material

EP 2 003 180 A1

**Description**

BACKGROUND OF THE INVENTION

Field of the Invention

The present invention relates to a pressure-sensitive adhesive sheet for identification which is used for taking traces such as fingerprints, footprints, and tiremarks, which are visualized by a method for coating with fine powder using a brush or the like or a method for spraying fine powder dispersed in a solution, by transferring the traces onto a pressure-sensitive adhesive surface.

Description of the Related Art

Conventionally, as methods for taking fingerprints, footprints or the like, a method in which powder such as aluminum is coated on a surface of a collection subject using a brush, and the powder adhering to the remaining fingerprints is taken; a method in which an aqueous solution including tri-iron tetroxide and a surfactant is coated on a trace, and the tri-iron tetroxide adhering to the trace is taken using a pressure-sensitive adhesive sheet, and the like are known.

As a conventional pressure-sensitive adhesive sheet for identification used for taking fingerprints and the like, transparent films on one side of which a urethane-based pressure-sensitive adhesive sheet is coated are known (see, for example, patent documents 1 to 4). As the urethane-based pressure-sensitive adhesive sheets have heat resistance, low-temperature resistance and water resistance, they have been predominantly used as the pressure-sensitive adhesive sheet for identification. In addition, as a sheet for detecting or taking fingerprints, those described in the following patent documents 5 to 8 are known.

In order to satisfactorily transfer a trace of fingerprints, which is struck up by adhering an aluminum powder to the ridges of the fingerprints, onto a pressure-sensitive adhesive sheet for identification, it is necessary to make the thickness of a pressure-sensitive adhesive agent layer thick to some degree.

However, in the pressure-sensitive adhesive sheets for identification, these pressure-sensitive adhesive agent layers are usually formed by coating with a pressure-sensitive adhesive agent solution diluted with a solvent and drying the solvent out of the pressure-sensitive adhesive agent solution.
The sheets therefore have a problem that the pressure-sensitive adhesive agent layer has a cratered surface when a thick film coating is conducted, because a dry film is formed on the surface of the pressure-sensitive adhesive agent layer, thus resulting in failure of the solvent within the layer to be dried. As means for solving this problem, a method in which pressure-sensitive adhesive agent layers are laminated (see, for example, patent document 3) is proposed; however, according to this method, the number of the production steps is increased, because the number of coating and drying steps corresponding to that of the pressure-sensitive adhesive agent layers laminated is required.

In case where fingerprints adhering to a steep protrusion surface of a uneven part are taken using a pressure-sensitive adhesive sheet for identification using a conventional acryl-based pressure-sensitive adhesive agent (see, for example, patent document 8), when the acryl-based pressure-sensitive adhesive sheet is closely brought into contact with the surface of the collection subject, the pressure-sensitive adhesive agent layer is extended at the part of the subject where its surface is suddenly changed such as edges and the thickness of the layer is made thin, thus resulting in lack of the amount of the pressure-sensitive adhesive agent at that part, whereby it is difficult to accurately take the fingerprints. On the other hand, when the thickness of the pressure-sensitive adhesive agent layer is made thick, the adhesive strength is increased and the acryl-based pressure-sensitive adhesive agent can exhibit its original, high adhesive strength, but, at the same time, it tends easily to cause peeling-off of a coating film on a collection subject, in particular, when the subject is an old coated surface, it is easy to cause damages on the scene.

On the other hand, according to a wet method using a solution (a dispersion) containing tri-iron tetroxide, mica or the like, it is necessary to remove the tri-iron tetroxide and the like remaining in a part other than a trace such as fingerprints, and accordingly a long drying time is sometimes required after washing with water. For example, if the subject from which fingerprints are taken is an automobile, it takes even 5 hours for drying the automobile. Further, there is a case where it is necessary to take fingerprints even under wet weather, and thus it is desired to provide pressure-sensitive adhesive sheets for identification which can satisfactorily transfer and take such as fingerprints on a wet collection subject to a pressure-sensitive adhesive surface.

According to the pressure-sensitive adhesive sheets for identification using conventional urethane-based pressure-sensitive adhesive agents, however, if the surface of a collection subject is wet with moisture, the adhering strength to fingerprints or the like lowers, and the sheet can easily be out of position with respect to a collection subject, that is, it is difficult to take the fingerprints, and the like. Incidentally, gelatin-based pressure-sensitive adhesive sheets for identification are also known, but they cannot be used in the presence of moisture, because gelatin is dissolved in water.

On the other hand, in a production of pressure-sensitive adhesive agents such as urethane-based pressure-sensitive adhesive agents used in the conventional pressure-sensitive adhesive sheets for identification, a large amount of a solvent is usually used. Recently, however, from the viewpoints of the safety of these organic solvents and protection of environment, methods wherein a large amount of the organic solvent is not used or methods wherein the amount of the organic solvent used is reduced are demanded.
[Patent document 1] Japanese Patent Application Laid-Open Publication No. 2001-40299
[Patent document 2] Japanese Patent Application Laid-Open Publication No. 2002-194302
[Patent document 3] Japanese Patent Application Laid-Open Publication No. 2002-200060
[Patent document 4] Japanese Patent Application Laid-Open Publication No. 2003-89776
[Patent document 5] Japanese Patent Application Laid-Open Publication No. 2000-83929
[Patent document 6] Japanese Patent Application Laid-Open Publication No. Hei 9-75329
[Patent document 7] Japanese Patent Application Laid-Open Publication No. 2004-187859
[Patent document 8] Japanese Patent Application Laid-Open Publication No. Hei 3-80833

SUMMARY OF THE INVENTION

In view of these circumstances, an object of the present invention is to provide a pressure-sensitive adhesive sheet for identification, which is obtained by easy thick film coating in formation of a pressure-sensitive adhesive agent layer; which can be used even if the surface of a collection subject is wet with moisture; which is obtained without using an organic solvent in production steps; and which causes few damages on the surface of the collection subject.
A further object of the invention is to provide a method for producing a pressure-sensitive adhesive sheet for identification which is obtained by easy thick film coating in formation of a pressure-sensitive adhesive agent layer; which can be used even if the surface of a collection subject is wet with moisture; which is obtained without using an organic solvent in production steps; and which causes few damages on the surface of the collection subject.
As a result of the intense studies for solving the above-mentioned problems, the present inventors have found that the objects can be attained by using pressure-sensitive adhesive sheets for identification as shown below; and have completed the present invention.
That is, in a pressure-sensitive adhesive sheet for identification which is used by transferring and taking a trace visualized onto a surface of a pressure-sensitive adhesive agent layer, the pressure-sensitive adhesive agent layer is formed by photoirradiation of a layer made of an acryl-based pressure-sensitive adhesive agent composition containing a) a (meth)acrylic acid alkyl ester in which an alkyl group has 1 to 14 carbon atoms on average, as a main monomer, b) a polyfunctional (meth)acrylate and c) a photoinitiator; the pressure-sensitive adhesive agent layer has a gel fraction of 50% by weight or more; and the pressure-sensitive adhesive agent layer has an adhesive strength to a stainless steel plate of 0.1 to 2.0 N/20 mm.
(Meth)acryl-based polymer, as used herein, refers to an acryl-based polymer and/or a methacryl-based polymer. (Meth)acrylic acid alkyl ester refers to an acrylic acid alkyl ester and/or a methacrylic acid alkyl ester, and (meth)acrylate refers to an acrylate and/or a methacrylate.
As shown in results of Examples, the pressure-sensitive adhesive sheet for identification of the present invention can be used even if the surface of a collection subject is wet with moisture, and causes fewer damages on the surface of the collection subject, because a pressure-sensitive adhesive agent layer, which is obtained by crosslinking a layer including an acryl-based pressure-sensitive adhesive agent composition (non-solvent type photopolymerizable pressure-sensitive adhesive agent composition) including specific components as mentioned above through photoirradiation, is used. Although the reason that the pressure-sensitive adhesive sheet for identification exhibits such characteristics is not clear in detail, it is assume that the non-solvent type photopolymerizable pressure-sensitive adhesive agent composition may provide a pressure-sensitive adhesive agent layer which is well-balanced between a cohesive strength and an adhesive strength by photo-crosslinking, whereby excellent adherability suitable for the pressure-sensitive adhesive sheet for identification as well as reduction of damages caused on a collection subject surface are realized at the same time.
Also, because the pressure-sensitive adhesive sheet for identification is obtained by photoirradiation of the layer including the acryl-based pressure-sensitive adhesive agent composition, the sheet can be produced without using organic solvents in the production steps. Further, the use of the acryl-based pressure-sensitive adhesive agent composition does not cause the conventional problem that, in the thick film coating step to obtain the pressure-sensitive adhesive agent layer, the solvent within the layer is not dried, thus resulting in a crated surface of the adhesive agent layer, and remarkably decreases the number of production steps, compared to the conventional methods which require the number of coating and drying steps corresponding to that of the pressure-sensitive adhesive agent layers laminated.
In the pressure-sensitive adhesive sheet for identification of the present invention, the pressure-sensitive adhesive agent layer is formed by photoirradiation of a layer made of an acryl-based pressure-sensitive adhesive agent composition containing a) a (meth)acrylic acid alkyl ester in which an alkyl group has 1 to 14 carbon atoms on average, as a main monomer, b) a polyfunctional (meth)acrylate and c) a photoinitiator; the pressure-sensitive adhesive agent layer has a gel fraction of 50% by weight or more and has an adhesive strength to a stainless steel plate of 0.1 to 2.0 N/20 mm. The use of the non-solvent type photopolymerizable pressure-sensitive adhesive agent composition provides a pressure-sensitive adhesive agent layer which is well-balanced between the cohesive strength and the adhesive strength.

The polyfunctional (meth)acrylate b), as used herein, refers to a (meth)acrylate containing two or more reactive functional groups in one molecule (a compound having at least two (meth)acryloyl groups); and examples of the reactive functional group may include functional groups capable of reacting with hydroxyl group, methylol group, and the like. It is assumed that the use of the polyfunctional (meth)acrylate b) may give the well-balanced the cohesive strength and the peeling property.

Examples of the polyfunctional (meth)acrylate b) may include, for example, trimethylol propane tri(meth)acrylate, pentaerythritol tetra(meth)acrylate, 1,2-ethyleneglycol di(meth)acrylate, 1,6-hexanedioldi(meth)acrylate, 1, 12-dodecandioldi(meth)acrylate, and the like.

It is preferable to formulate the polyfunctional (meth)acrylate b) in an amount that the gel fraction of the acryl-based pressure-sensitive adhesive agent layer formed from the acryl-based pressure-sensitive adhesive agent composition is 50% by weight or more. When the gel fraction is less than 50% by weight, the cohesive strength of the adhesive agent layer is insufficient, thus resulting in the decreased effect of suppressing the generation of adhesive deposit on an adherend.

In the present invention, the gel fraction is obtained by weighing precisely about 1 g of a pressure-sensitive adhesive agent composition, immersing the composition in about 40 g of ethyl acetate for 7 days, then recovering all of insoluble contents in ethyl acetate, drying it at 130°C for 2 hours, measuring its weight, and substituting the obtained weight into the following formula to calculate.

$$\text{Insoluble content (gel fraction) (\% by weight)} = (\text{Weight of insoluble content} / \text{Weight of pressure-sensitive adhesive agent composition before immersing}) \times 100.$$

In the present invention, the acryl-based pressure-sensitive adhesive agent composition is preferably obtained by non-solvent type photopolymerization. When such an acryl-based adhesive agent composition is used, it is easy to control the preparation of the non-solvent type photopolymerizable adhesive agent composition and the degree of polymerization, and furthermore the photo-crosslinking step can be performed easily and efficiently.

Further, it is preferable that the amount of a polar group-containing monomer d) is less than 4.5 parts by weight based on 100 parts by weight of the (meth)acrylic acid ester a) in which the alkyl group has 1 to 14 carbon atoms as a main monomer, in all monomers of the acryl-based pressure-sensitive adhesive agent composition. When the amount of the polar group-containing polymerizable monomer d) is defined, the well-balanced cohesive strength and the peeling property can be certainly obtained.

The polar group-containing polymerizable monomer d) used in the present invention refers to a polymerizable monomer having a large polar functional group and a polymerizable unsaturated bond in its molecule, which excludes the polyfunctional (meth)acrylate b). Examples of the large polar functional group may include functional groups such as a carboxyl group, a sulfonyl group, a hydroxyl group, and a methylol group.

In the pressure-sensitive adhesive sheet for identification of the invention, the pressure-sensitive adhesive agent layer has an adhesive strength to a stainless steel plate of 0.1 to 2.0 N/20 mm. When the production method having the above-mentioned steps is employed, the pressure-sensitive adhesive sheet for identification having the pressure-sensitive adhesive agent layer with the adhesive strength of above-mentioned range can be easily produced. When the adhesive strength is within this range, peeling-off workability is good upon transferring and taking.

Further, it is preferable that the pressure-sensitive adhesive agent layer has a thickness of 50 to 500 μm. When the thickness is within this range, the tracking performance to unevenness is good even if the collection subject has an uneven surface.

It is preferable that a target to be transferred is tri-iron tetroxide fine powder adhering to the trace. When the tri-iron tetroxide fine powder is employed, its dispersion is used and accordingly washing with water is required. The pressure-sensitive adhesive sheet for identification of the invention therefore is particularly useful, which is not out of position event if the surface of the collection subject is wet with moisture, and can clearly transfer and take the trace visualized.

In a method for producing a pressure-sensitive adhesive sheet for identification which is used by transferring and taking a trace visualized onto a surface of a pressure-sensitive adhesive agent layer, the present invention includes the steps of: forming on a substrate a layer made of an acryl-based pressure-sensitive adhesive agent composition containing a) a (meth)acrylic acid alkyl ester in which an alkyl group has 1 to 14 carbon atoms on average, as a main monomer, b) a polyfunctional (meth)acrylate and c) a photoinitiator; and performing photoirradiation of the layer made of the acryl-based pressure-sensitive adhesive agent composition.

When the production method of the invention having the above-mentioned steps is employed, organic solvents are not used in preparation steps, the thick film coating to form the adhesive agent layer can be easily conducted, and the pressure-sensitive adhesive sheet for identification having the characteristics as mentioned above can be efficiently obtained.

BRIEF DESCRIPTION OF THE DRAWING

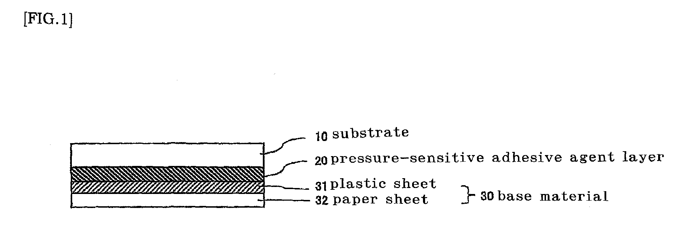

Fig. 1 is a cross-sectional view showing one example of a pressure-sensitive adhesive sheet for identification of the present invention before using.

DETAILED DESCRIPTION OF THE PREFERRED EMBODIMENTS

Hereinafter, some embodiments of the invention will be described with reference to the drawing. Fig. 1 is a cross-sectional view showing one example of a pressure-sensitive adhesive sheet for identification of the present invention before using.

The pressure-sensitive adhesive tape for identification of the invention is used, as shown in Fig. 1, for transferring and taking a trace visualized on a surface of a pressure-sensitive adhesive agent layer 20. The adhesive agent layer 20 is formed on one side of a substrate 10. In this case, a primer layer, and the like, may be formed between the pressure-sensitive adhesive agent layer 20 and the substrate 10.

Examples of the trace visualized may include targets of identification such as fingerprints, footprints, and tiremarks. The visualizing methods may be either dry methods using fine powder, or wet methods.

Examples of the dry method may include, for example, a method in which a trace is coated with aluminum fine powder using a brush, and then the powder existing on parts other than the trace parts is removed with wind or the like; the method in which magnetic powder, or the like, is used instead of the aluminum powder; and the like. When the pressure-sensitive adhesive tape for identification of the present invention is used, it is possible to reduce occurrence of peeling-off of a coating film on a collection subject, and in particular, even on an old coated surface, it is possible to cause fewer damages on the scene.

Examples of the wet method may include, for example, a method in which a trace part is coated with an aqueous dispersion containing tri-iron tetroxide fine powder and a surfactant, and then washing with water is conducted; the method in which mica or pearl powder is used instead of the tri-iron tetroxide; and the like. When a target to be transferred is tri-iron tetroxide fine powder adhering to a trace, the present invention is particularly useful. When the pressure-sensitive adhesive tape for identification of the invention is used, even if the surface of the collection subject is wet with moisture after washing with water, the pressure-sensitive adhesive sheet is not out of position, and the trace visualized can be clearly transferred and taken. In other words, even if the collection subject is not dried after washing with water, it is possible to transfer and take the trace. Furthermore, it is possible to transfer and take the trace under rainy weather.

The pressure-sensitive adhesive agent layer used in the present invention is formed by performing photoirradiation of a layer made of the acryl-based pressure-sensitive adhesive agent composition containing the (meth)acrylic acid alkyl ester a) in which the alkyl group has 1 to 14 carbon atoms on average, as a main monomer, the polyfunctional (meth)acrylate b) and the photoinitiator c);
the pressure-sensitive adhesive agent layer has a gel fraction of 50% by weight or more and has an adhesive strength to a stainless steel plate of 0.1 to 2.0 N/20 mm.

As the acryl-based pressure-sensitive adhesive agent composition, an acryl-based pressure-sensitive adhesive agent composition containing the (meth)acrylic acid alkyl ester a) in which the alkyl group has 1 to 14 carbon atoms on average, as a main monomer, the polyfunctional (meth)acrylate b) and the photoinitiator c) may be used.

Examples of the (meth)acrylic acid alkyl ester a) in which the alkyl group has 1 to 14 carbon atoms on average, as a main monomer may include, for example, methyl (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, n-tridecyl (meth)acrylate, n-tetradecyl (meth)acrylate, and the like.

The (meth)acrylic acid alkyl ester a) in which the alkyl group has 1 to 14 carbon atoms on average, as a main monomer may be used alone or a mixture of two or more kinds. The amount of the whole contents is preferably from 50 to 99% by weight, more preferably from 60 to 98% by weight, further more preferably from 70 to 95% by weight of all monomers in the acryl-based pressure-sensitive adhesive agent composition.

In the pressure-sensitive adhesive agent composition, the (meth)acrylic acid alkyl ester a) in which the alkyl group has 1 to 14 carbon atoms on average, as a main monomer, may be a partial polymer (a monomer syrup in which a part thereof is polymerized). In this case, for example, a monomer solution (monomer syrup) containing a polymer of 10% by weight and having a viscosity of 20 P(2 Pa·S) is preferable.

The acryl-based pressure-sensitive adhesive agent composition may include polymerizable monomers capable of controlling a glass transition temperature and the peeling property of the acryl-based pressure-sensitive adhesive agent composition as other polymerizable monomer components within a range where the effects of the invention are not impaired, so long as the Tg is set to 0°C or less (usually -100°C or more) because of easy control of the balance of adherability.

Other polymerizable monomer components used in the acryl-based pressure-sensitive adhesive agent composition may include, for example, a component capable of improving cohesive strength and heat resistance, such as vinyl esters and aromatic vinyl compounds; component capable of improving adhesive strength or having a functional group serving as a cross-linking site, such as amido group-containing monomers, amino group-containing monomers, epoxy group-containing monomers, and vinyl ethers. They may be appropriately used. These monomer compounds may be used alone or a mixture of two or more kinds.

Examples of the vinyl ester may include, for example, vinyl acetate, vinyl propionate, vinyl laurate, and the like.

Examples of the aromatic vinyl compound may include, for example, styrene, chlorostyrene, chloromethyl styrene, α-methyl styrene, other substituted styrenes, and the like.

Examples of the amido group-containing monomer may include, for example, acrylamide, methacrylamide, diethyl acrylamide, N-vinyl pyrrolidone, N,N-dimethyl acrylamide, N,N-dimethyl methacrylamide, N,N-diethyl acrylamide, N,N-diethyl methacrylamide, N,N'-methylenebisacrylamide, N,N-dimethylaminopropyl acrylamide, N,N-dimethylaminopropyl methacrylamide, diacetone acrylamide, and the like.

Examples of the amino group-containing monomer may include, for example, aminoethyl (meth)acrylate, N,N-dimethylaminoethyl (meth)acrylate, N,N-dimethylaminopropyl (meth)acrylate, (meth)acryloyl morpholine, and the like.

Examples of the epoxy group-containing monomer may include, for example, glycidyl (meth)acrylate, methylglycidyl (meth)acrylate, allyl glycidyl ether, and the like.

Examples of the vinyl ether may include, for example, methyl vinyl ether, ethyl vinyl ether, isobutyl vinyl ether, and the like.

In the present invention, the other polymerizable monomer components mentioned above may be used alone or a mixture of two or more kinds.

The polyfunctional (meth)acrylate b) refers to a (meth)acrylate containing two or more reactive functional groups in one molecule (a compound having at least two (meth)acryloyl groups); and examples of the reactive functional group may include functional groups capable of reacting hydroxyl group, methylol group, and the like. It is assumed that the use of the polyfunctional (meth)acrylate b) may give the well-balanced cohesive strength and the peeling property.

Examples of the polyfunctional (meth)acrylate b) may include, for example, di- or more functional polyvalent alkyl (meth)acrylates such as trimethylolpropane tri(meth)acrylate, pentaerythritol tetra(meth)acrylate, 1,2-ethylene glycol di(meth)acrylate, and 1,12-dodecanediol di(meth)acrylate, and the like. The polyfunctional (meth)acrylates b) may be used alone or a mixture of two or more kinds.

It is preferable that the non-solvent type photopolymerizable pressure-sensitive adhesive agent composition includes the polyfunctional (meth)acrylate b) in an amount of 0.1 to 3 parts by weight, more preferably 0.1 to 2 parts by weight, further more preferably 0.2 to 1.5 parts by weight based on 100 parts by weight of the (meth)acrylic acid alkyl ester a) in which the alkyl group has 1 to 14 carbon atoms on average, as a main monomer. When the content amount of the polyfunctional (meth)acrylate b) is defined, it is assume that the well-balanced cohesive strength and the peeling property may be obtained.

Further, in the non-solvent type photopolymerizable pressure-sensitive adhesive agent composition used in the invention, it is preferable that, the amount of the polar group-containing polymerizable monomer d) other than the component b) is less than 4.5 parts by weight, more preferably less than 3 parts by weight, further more preferably less than 2 parts by weight based on 100 parts by weight of the (meth)acrylic acid alkyl ester a) in which the alkyl group has 1 to 14 carbon atoms on average, as a main monomer. When the content amount of the polar group-containing polymerizable monomer d) is defined, it is assumed that the well-balanced cohesive strength and the peeling property may more certainly be obtained.

In the present invention, the polar group-containing polymerizable monomer d) refers to a polymerizable monomer having a large polar functional group in the molecule, which is other than the polyfunctional (meth)acrylate b). Example of the large polar functional group may include a carboxyl group, a sulfonyl group, a hydroxyl group, a methylol group, and the like.

Examples of the polar group-containing polymerizable monomer d) may include, for example, unsaturated acids such as carboxyl group-containing monomers, acid anhydride group-containing monomers, and phosphate group-containing monomers, hydroxyl group-containing monomers, and the like. The polar group-containing polymerizable monomers d) may be used alone or a mixture of two or more kinds.

The carboxyl group-containing monomers may include, for example, acrylic acid, mathacrylic acid, carboxyethyl (meth)acrylate, carboxypentyl (meth)acrylate, itaconic acid, maleic acid, fumaric acid, crotonic acid, and the like.

The acid anhydride group-containing monomers may include, for example, maleic acid anhydride, itaconic acid anhydride and anhydrides of the carboxyl group-containing monomers as mentioned above, and the like.

The sulfonic acid group-containing monomers may include, for exmple, styrene sulfonic acid, allyl sulfonic acid, 2-(meth)acrylamide-2-methylpropane sulfonic acid, (meth)acrylamidepropane sulfonic acid, sulfopropyl (meth)acrylate, (meth)acryloyloxynaphthalene sulfonic acid, sodium vinylsulfonate, and the like.

The phosphate group-containing monomers may include, for example, 2-hydroxyethylacryloylphosphate, and the like.

The hydroxyl group-containing monomers may include, for example, 2-hydroxyethyl (meth)acrylate, 2-hydroxypropyl (meth)acrylate, 4-hydroxybutyl (meth)acrylate, 6-hydroxyhexyl (meth)acrylate, 8-hydrooctyl (meth)acrylate, 10-hydroxydecyl (meth)acrylate, 12-hydroxylauryl (meth)acrylate, (4-hydroxymethylcyclohexyl)methyl acrylate, vinyl alcohol, allyl alcohol, 2-hydroxyethyl vinyl ether, 4-hydroxybutyl vinyl ether, diethyleneglycol monovinyl ether, and the like.

Further, the photoinitiator c) (and photoinitiator aid) may be added to the non-solvent type photopolymerizable pressure-sensitive adhesive agent composition when or after the (meth)acrylic acid alkyl ester a) in which the alkyl group has 1 to 14 carbon atoms on average, as a main monomer and the polyfunctional (meth)acrylate b) are admixed. When the partial polymer of the acryl-based pressure-sensitive adhesive agent composition is obtained by photopolymerization, unreacted photoinitiator (and photoinitiator aid) remaining in the partial polymer upon the photopolymerization, may be appropriately used for photo-crosslinking of the pressure-sensitive adhesive agent composition. On the other hand, when the photoinitiator (and photoinitiator aid) does not remain in the partial polymerization of the (meth)acrylic acid alkyl ester a) in which the alkyl group has 1 to 14 carbon atoms on average, as a main monomer, it is preferable to add the photoinitiator (and photoinitiator aid).

As the component c) photoinitiator, any substance may be used so long as it generates a radical or cation by irradiation of ultraviolet-ray having a wave length which serves as a trigger of the polymerization reaction. Example thereof may include, for example, radical polymerization photoinitiators, cationic polymerization photoinitiators, and the like.

The radical polymerization photoinitiators may include, for example, benzoin ethers such as benzoisomethyl ether, benzoin isopropyl ether, and 2,2-dimethoxy-1,2-diphenylethane-1-one; substituted benzoin ethers such as anisol methyl ether; substituted acetophenones such as 2,2-diethoxyacetophenone, 2,2-dimethoxy-2-phenylacetophenone, and 1-hydroxy-cyclohexyl-phenyl-ketone; substituted α-ketol such as 2-methyl-2-hydroxypropiophenone; aromatic sulfonyl chlorides such as 2-naphthalene sulfonyl chloride; photoactive oximes such as 1-phenyl-1,1-propanedione-2-(o-ethoxycarbonyl)-oxime; acylphosphine oxide, and the like. These compounds may used alone or a mixture of two or more kinds.

The cationic polymerization photoinitiator may include, for example, onium salts such as aromatic diazonium salt, aromatic iodonium salt and aromatic sulfonium salt; organometallic complexes such as iron-allene complex, titanocene complex, and arylsilanol-aluminum complex; nitrobenzyl ester, sulfonic acid derivatives, phosphoric acid esters, phenol sulfonic acid esters, diazonaphthoquinone, N-hydroxyimidosulfonate, and the like. These compounds may be used alone or a mixture of two or more kinds.

When the photoinitiator (and photoinitiator aid) used for the partial polymerization of the (meth)acrylic acid alkyl ester a) in which the alkyl group has 1 to 14 carbon atoms on average as a main monomer does not remain, it is preferable that the photoinitiator c) is added in an amount of 0.01 to 5 parts by weight, more preferably 0.05 to 5 parts by weight, further more preferably 0.1 to 3 parts by weight to the above-mentioned monomer mixture based on 100 parts by weight of the (meth)acrylic acid alkyl ester a) in which the alkyl group has 1 to 14 carbon atoms on average, as a main monomer.

Further, it is possible to co-use photoinitiator aids such as amines. The photoinitiator aids may include, for example, 2-dimethylaminoethyl benzoate, dimethyl aminoacetophenone, p-dimethyl aminobenzoic acid ethyl ester, p-dimethyl aminobenzoic acid isoamyl ester, and the like. These compounds may be used alone or a mixture of two or more kinds.

Also, in the present invention, the pressure-sensitive adhesive agent composition can give excellent heat resistance and weatherability by appropriately corsslinking it in another manner.

Examples of the crosslinking method may include methods using a crosslinking agent such as isocyanate compounds, epoxy compounds, melamine resins, and aziridine compound. Of these, the isocyanate compounds and the epoxy compounds are particularly preferably used, because they give suitable cohesive strength. These compounds may be used alone or a mixture of two or more kinds.

Of these, the isocyanate compounds may include aromatic isocyanates such as tolylene diisocyanate, and xylene diisocyanate; alicyclic isocyanates such as isophoronediisocyanate; aliphatic isocyanates such as hexamethylene diisocyanate, and the like.

More specifically, the isocyanate compounds may include, for example, lower aliphatic polyisocyanates such as butylene diisocyanate, and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, and xylylene diisocyanate; isocyanate adducts such as trimethylol propane/tolylene diisocyanate trimeric adduct, trimethylol propane/hexamethylene diisocyanate trimeric adduct, and isocyanurate of hexamethylene diisocyanate (Coronate HX made by Nippon Polyurethane Industry Co., Ltd.), and the like. These isocyanate compounds may be used alone or a mixture of two or more kinds.

The epoxy compounds may include, for example, N,N,N',N'-tetraglycidyl-m-xylenediamine (TETRAD-X™ made by Mitsubishi Gas Chemical Company, Inc.), 1,3-bis(N,N-diglycidylaminomethyl)cyclohexane (TETRAD-C™ made by Mitsubishi Gas Chemical Company, Inc.), and the like. These compounds may be used alone or a mixture of two or more kinds.

The melamine resin may include, for example, hexamethylol melamine, and the like. The melamine resins may be used alone or a mixture of two or more kinds.

The aziridine derivatives may include, for example, HDU™, TAZM™, and TAZO™ which are all commercial products made by Sogo Pharmaceutical Co., Ltd., and the like. These compounds may be used alone or a mixture of two or more kinds.

The amount of the crosslinking agent used is suitably chosen depending on the balance with the acryl-based pressure-sensitive adhesive agent composition to be crosslinked. In order to obtain the satisfactory heat resistance due to the cohesive strength of the acryl-based pressure-sensitive adhesive agent, the gel fraction of the pressure-sensitive adhesive agent layer is generally 50% by weight or more, preferably 60% by weight or more, more preferably 70% by weight or more.

In the present invention, the acryl-based pressure-sensitive adhesive composition is preferably a composition obtained by non-solvent type photopolymerization. When the above-mentioned acryl-based pressure-sensitive adhesive agent composition is used, it is easy to control the preparation of the non-solvent type photopolymerizable adhesive agent composition and the degree of polymerization, and furthermore the photo-crosslinking step can be performed easily and efficiently. When the acryl-based pressure-sensitive adhesive agent composition obtained by the non-solvent type photopolymerization is used, the acryl-based pressure-sensitive adhesive agent composition including unreacted (meth)acrylate and the photoinitiator (and photoinitiator aid) may be used as it is. In this case, purification step for the polymerization reaction produced of the acryl-based pressure-sensitive adhesive agent composition can be suitably omitted or reduced.

Preferably, the photopolymerization is preperformed by ultraviolet-ray irradiation. The obtained acryl-based pressure-sensitive adhesive agent composition may be any one of random polymers, block-copolymers, alternative copolymers, and graft-copolymers. When the photopolymerization is performed by using ultraviolet-ray, it is preferable to add a photoinitiator.

As the ultraviolet-ray, it is preferable to use ultraviolet-ray having a wave length of 200 to 400 nm. The ultraviolet-ray used can be varied depending on the kind and amount of the photoinitiator, and the thickness of the layer.

As the photoinitiator, any substance may be used so long as it generates a radical or cation by irradiation of ultraviolet-ray having a wave length which serves as a trigger of the polymerization reaction. Example thereof may include, for example, radical polymerization photoinitiators, cationic polymerization photoinitiators, and the like.

The radical polymerization photoinitiators may include, for example, benzoin ethers such as benzoisomethyl ether, benzoin isopropyl ether, and 2,2-dimethoxy-1,2-diphenylethane-1-one; substituted benzoin ethers such as anisol methyl ether; substituted acetophenones such as 2,2-diethoxyacetophenone, 2,2-dimethoxy-2-phenyl acetophenone, and 1-hydroxy-cyclohexyl-phenyl-ketone; substituted $\alpha$-ketols such as 2-methyl-2-hydroxypropiophenone; aromatic sulfonyl chlorides such as 2-naphthalene sulfonyl chloride; photoactive oximes such as 1-phenyl-1,1-propanedione-2-(o-ethoxycarbonyl)-oxime; acylphosphineoxide, and the like. These compounds may be used alone or a mixture of two or more kinds.

The cationic polymerization photoinitiator may include, for example, onium salts such as aromatic diazonium salt, aromatic iodonium salt and aromatic sulfonium salt; organometallic complexes such as iron-allene complex, titanocene complex, and arylsilanol-aluminum complex; nitrobenzyl ester, sulfonic acid derivatives, phosphoric acid esters, phenol sulfonic acid esters, diazonaphthoquinone, N-hydroxyimidesulfonate, and the like. These compounds may be used alone or a mixture of two or more kinds.

The ultraviolet-ray can be irradiated by using an appropriate light source such as a high-pressure mercury lamp, a microwave excitation lamp, and a chemical lamp.

As the main component (50% by weight or more of the total amount of the adhesive agent composition) of the acryl-based pressure-sensitive adhesive agent composition used in the present invention, in the acryl-based pressure-sensitive adhesive agent composition, a (meth)acryl-based polymer having a glass transition temperature (Tg) of generally 0°C or less, preferably -100 to -50°C, more preferably -80 to -10°C, is used.

When the glass transition temperature of the polymer is more than 0˚C, it is sometimes difficult to get the sufficient adhesive strength. The glass transition temperature (Tg) of the acryl-based pressure-sensitive adhesive agent composition can be adjusted to the above-mentioned range by appropriately changing the used component or composition ratio of the monomer component.

The pressure-sensitive adhesive agent composition used in the present invention may further contain other known additives. The additives for example, powders such as coloring agents and pigments, surfactants, plasticizers, adhesiveifiers, polymers having a lower molecular weight, surface lubricants, leveling agents, antioxidants, corrosion inhibitors, light-stabilizers, ultraviolet-ray absorbent, polymerization inhibitors, silane coupling agents, inorganic or organic fillers, metal powder, particles, foil, and the like can be appropriately added to the pressure-sensitive adhesive agent composition depending on the use. These compounds may be used alone or a mixture of two or more kinds.

The pressure-sensitive adhesive agent composition used in the present invention is the non-solvent type photopolymerizable pressure-sensitive adhesive agent composition having the above-mentioned ingredients.

On the other hand the pressure-sensitive adhesive agent layer 20 in the invention is formed by photo-crosslinking a layer made of the non-solvent type photopolymerizable pressure-sensitive adhesive agent composition.

It is preferable that the viscosity of the acryl-based pressure-sensitive adhesive agent composition is previously adjusted to a viscosity suitable for coating (usually, 0.3 to 40 (Pa·s) at 25˚C, measured by using a Brookfield type viscometer), from the viewpoint of handling. Consequently, the non-solvent type photopolymerizable adhesive agent composition may be prepolymerized into a partial polymer.

The degree of polymerization of the partial polymer of the non-solvent type photopolymerizable pressure-sensitive adhesive agent composition is adjusted to preferably about 2 to 40% by weight, more preferably 5 to 20% by weight, depending on the molecular weight of the polymer contained in the partial polymer, though.

It is preferable that the partial polymerization is performed by ultraviolet-ray irradiation, avoiding the contact with oxygen.

Preferably, the acryl-based pressure-sensitive adhesive agent layer has a degree of polymerization of 96% or more. An illuminance and an amount of light are determined within a range where the degree of polymerization is not impaired, and the irradiation of ultraviolet-ray is preferable. The preferable irradiation conditions depend on the composition of the pressure-sensitive adhesive agent, and the kind and amount (parts) of the photoinitiator.

When the degree of polymerization is less than 96%, the adhering strength lowers and the remaining monomers generate odor. The degree of polymerization can be raised by drying the layer after the ultraviolet-ray irradiation.

Degree of Polymerization (% by weight) = [Weight (g) of acryl-based pressure-sensitive adhesive agent composition after 130°C × 2 hr drying/Weight (g) of acryl-based pressure-sensitive adhesive agent composition before drying] × 100.

The ultraviolet-ray can be irradiated by using a suitable light source such as a high-pressure mercury lamp, a microwave excitation lamp, and a chemical lamp.

The pressure-sensitive adhesive sheet for identification of the invention is obtained by forming the pressure-sensitive adhesive agent layer on a substrate. When the sheet is formed, the crosslinking of the pressure-sensitive adhesive agent composition is generally performed after the pressure-sensitive adhesive agent composition is coated; but it is also possible to crosslink the layer including the pressure-sensitive adhesive agent composition on another substrate to form the pressure-sensitive adhesive agent layer, and then to transfer the layer onto the above-mentioned substrate.

As a method for forming the adhesive agent layer, a known method for producing a pressure-sensitive adhesive sheet may be appropriately used. Examples thereof may include, for example, roll coating methods, gravure coating methods, reverse coating methods, roll brushing methods, spray coating methods, air-knife coating methods, extrusion coating methods using, for example, a die coater, and the like.

The pressure-sensitive adhesive agent layer has preferably a thickness of 50 to 500 $\mu$m, more preferably 100 to 400 $\mu$m, further more preferably 150 to 300 $\mu$m. When the thickness is 50 $\mu$m or more, it is possible to effectively take fingerprints even from an uneven surface like a 100 yen coin.

The pressure-sensitive adhesive sheet for identification of the present invention has an adhesive strength to a stainless plate of 0.1 to 2.0 N/20 mm, preferably 0.1 to 1.5/20 mm, more preferably 0.2 to 1.0 N/20 mm. When the production method of the invention is used, the pressure-sensitive adhesive sheet for identification having the adhesive strength within the above-mentioned range can be easily produced; and when the adhesive strength is within this range, the peeling-off workability is good upon transferring and taking. In particular, when the pressure-sensitive adhesive sheet for identification having the adhesive strength within the above-mentioned range is used, fingerprints can be taken well from an old coating surface or a fragile and breakable surface.

Although the substrate 10 used in the present invention is not particularly limited, films of polyesters such as polyethylene terephthalate, polybutylene terephthalate, and polyethylene naphthalate; films of polyolefins such as polyethylene and polypropylene can be used. The substrate surface to be coated with the pressure-sensitive adhesive agent, if necessary, may be subjected to a corona treatment, in order to improve anchoring effect.

The thickness of the substrate is not particularly limited, so long as the taking workability is good, and it is usually about 50 to 150 $\mu$m, preferably about 50 to 125 $\mu$m.

The pressure-sensitive adhesive tape for identification of the invention generally adheres to a base material 30 before or after using. The base material 30 has a structure in which a black or white plastic film 31 is bonded or fused to a backside of a paper sheet 32, and the pressure-sensitive adhesive agent layer 20 is laminated onto the surface of the plastic film 31 to form the tape. If necessary, the plastic film may be coated with a silicone or long-chain alkyl releasing agent.

The base material has a thickness of generally about 100 to 400 $\mu$m, preferably about 150 to 300 $\mu$m.

The base material may be subjected to a releasing or antifouling treatment using a releasing agent such as a silicone, fluorine, long-chain alkyl or fatty acid releasing agent, or silica powder; an easy bonding treatment such as an acid treatment, alkali treatment, primer treatment, corona treatment, plasma treatment or ultraviolet-ray treatment; or an antistatic treatment using a coating method, kneading method or deposition method, if necessary.

The pressure-sensitive adhesive sheet for identification of the invention has preferably a thickness of 100 to 650 $\mu$m, more preferably 150 to 550 $\mu$m, further more preferably 300 to 500 $\mu$m.

On the other hand, in a method for producing a pressure-sensitive adhesive sheet for identification which is used by transferring and taking a trace visualized onto a surface of a pressure-sensitive adhesive agent layer, the present invention includes the steps of:

forming on a substrate a layer comprising an acryl-based pressure-sensitive adhesive agent composition made of
a) a (meth)acrylic acid alkyl ester in which an alkyl group has 1 to 14 carbon atoms on average, as a main monomer,
b) a polyfunctional (meth)acrylate and c) a photoinitiator; and
performing photoirradiation of the layer made of the acryl-based pressure-sensitive adhesive agent composition.

When the production method of the invention having the above-mentioned steps is used, organic solvents are not used in any production step, the thick film coating for forming the pressure-sensitive adhesive agent layer is easily performed, and the pressure-sensitive adhesive sheet for identification having the above-mentioned characteristics can be efficiently obtained.

Examples

Hereinafter, Examples and the like specifically showing the content and the effects of the present invention will be described. In Examples, evaluation items were determined as mentioned below.

<Preparation of monomer syrup (A)>

[Monomer syrup (A)]

100 parts by weight of 2-Ethylhexyl acrylate, 0.05 parts by weight of 2,2-dimethoxy-1,2-diphenylethane-1-one, and 0.05 parts by weight of 1-hydroxy-cyclohexyl-phenyl-ketone were fed in a flask, and nitrogen gas was introduced into the flask while the mixture was gently stirred, and ultraviolet-ray irradiation was conducted to give a monomer syrup (A) (degree of polymerization is 13.0. % by weight).

$$\text{Degree of Polymerization (\% by weight)} = (\text{Weight after } 130°C \times 2 \text{ hr drying}) / (\text{Weight before drying}) \times 100$$

Example 1

(Preparation of pressure-sensitive adhesive agent solution)

To the monomer syrup (A), 0.6 parts by weight of trimethylolpropane triacrylate based on 100 parts by weight of the monomer syrup (A) was added, and the mixture was uniformly stirred at ordinary temperature (25˚C) for 15 minutes to prepare a photopolymerizable pressure-sensitive adhesive agent (1).

(Formation of pressure-sensitive adhesive sheet)

A polyethylene terephthalate film (Lumiror T60 made by Toray Industries, Inc., thickness: 75 $\mu$m) was coated with the photopolymerizable acryl-based pressure-sensitive adhesive agent (1) in a thickness after photopolymerization of 280 $\mu$m, and then the resulting layer including the pressure-sensitive adhesive agent was covered with a polyethylene terephthalate film (Diafoil MRN 38 made by Mitsubishi Kagaku Polyester Film Kabushiki Kaisha, thickness: 38 $\mu$m), which had been subjected to peeling-off treatment, to form a laminated sheet. The resulting sheet was photopolymerized by using a metal halide lamp (maximaum illuminance: 250 mW/cm$^2$, amount of light: 8000 mJ/cm$^2$) to give a pressure-sensitive adhesive sheet.

Example 2

(Preparation of adhesive agent solution)

To the monomer syrup (A), 0.6 parts by weight of trimethylolpropane triacrylate and 1 part by weight of acrylic acid based on 100 parts by weight of the monomer syrup (A) were added, and the mixture was stirred at ordinary temperature (25˚C) for 15 minutes to prepare a photopolymerizable pressure-sensitive adhesive agent (2).

(Formation of pressure-sensitive adhesive sheet)

A polyethylene terephthalate film (Lumiror T60 made by Toray Industries, Inc., thickness: 75 $\mu$m) was coated with the photopolymerizable acryl-based pressure-sensitive adhesive agent (2) in a thickness after photopolymerization of 280 $\mu$m, and then the resulting layer including the pressure-sensitive adhesive agent was covered with a polyethylene terephthalate film (Diafoil MRN 38 made by Mitsubishi Kagaku Polyester Film Kabushiki Kaisha, thickness: 38 $\mu$m), which had been subjected to peeling-off treatment, to form a laminated sheet. The resulting sheet was photopolymerized by using a metal halide lamp to give a pressure-sensitive adhesive sheet.

Example 3

(Preparation of adhesive agent solution)

To the monomer syrup (A), 0.4 parts by weight of trimethylolpropane triacrylate and 1 part by weight of acrylic acid based on 100 parts by weight of the monomer syrup (A) were added, and the mixture was stirred at ordinary temperature (25˚C) for 15 minutes to prepare a photopolymerizable pressure-sensitive adhesive agent (3).

(Formation of pressure-sensitive adhesive sheet)

A polyethylene terephthalate film (Lumiror T60 made by Toray Industries, Inc., thickness: 75 $\mu$m) was coated with the photopolymerizable acryl-based pressure-sensitive adhesive agent (3) in a thickness after photopolymerization of 280 $\mu$m, and then the resulting layer including the pressure-sensitive adhesive agent was covered with a polyethylene terephthalate film (Diafoil MRN 38 made by Mitsubishi Kagaku Polyester Film Kabushiki Kaisha, thickness: 38 $\mu$m), which had been subjected to peeling-off treatment, to form a laminated sheet. The resulting sheet was photopolymerized by using a metal halide lamp to give a pressure-sensitive adhesive sheet.

Example 4

(Preparation of adhesive agent solution)

To the monomer syrup (A), 0.4 parts by weight of trimethylolpropane triacrylate and 4 parts by weight of acrylic acid based on 100 parts by weight of the monomer syrup (A) were added, and the mixture was stirred at ordinary temperature (25°C) for 15 minutes to prepare a photopolymerizable pressure-sensitive adhesive agent (4).

(Formation of pressure-sensitive adhesive sheet)

A polyethylene terephthalate film (Lumiror T60 made by Toray Industries, Inc., thickness: 75 $\mu$m) was coated with the photopolymerizable acryl-based pressure-sensitive adhesive agent (4) in a thickness after photopolymerization of 280 $\mu$m, and then the resulting layer including the pressure-sensitive adhesive agent was covered with a polyethylene terephthalate film (Diafoil MRN 38 made by Mitsubishi Kagaku Polyester Film Kabushiki Kaisha, thickness: 38 $\mu$m), which had been subjected to peeling-off treatment, to form a laminated sheet. The resulting sheet was photopolymerized by using a metal halide lamp to give a pressure-sensitive adhesive sheet.

Example 5

(Preparation of adhesive agent solution)

To the monomer syrup (A), 0.15 parts by weight of trimethylolpropane triacrylate and 4 parts by weight of acrylic acid based on 100 parts by weight of the monomer syrup (A) were added, and the mixture was stirred at ordinary temperature (25°C) for 15 minutes to prepare a photopolymerizable pressure-sensitive adhesive agent (5).

(Formation of pressure-sensitive adhesive sheet)

A polyethylene terephthalate film (Lumiror T60 made by Toray Industries, Inc., thickness: 75 $\mu$m) was coated with the photopolymerizable acryl-based pressure-sensitive adhesive agent (5) in a thickness after photopolymerization of 280 $\mu$m, and then the resulting layer including the pressure-sensitive adhesive agent was covered with a polyethylene terephthalate film (Diafoil MRN 38 made by Mitsubishi Kagaku Polyester Film Kabushiki Kaisha, thickness: 38 $\mu$m), which had been subjected to peeling-off treatment, to form a laminated sheet. The resulting sheet was photopolymerized by using a metal halide lamp to give a pressure-sensitive adhesive sheet.

Comparative Example 1

(Preparation of adhesive agent solution)

To the monomer syrup (A), 0.2 parts by weight of trimethylolpropane triacrylate and 2 parts by weight of acrylic acid based on 100 parts by weight of the monomer syrup (A) were added, and the mixture was stirred at ordinary temperature (25°C) for 15 minutes to prepare a photopolymerizable pressure-sensitive adhesive agent (6).

(Formation of pressure-sensitive adhesive sheet)

A polyethylene terephthalate film (Lumiror T60 made by Toray Industries, Inc., thickness: 75 $\mu$m) was coated with the photopolymerizable acryl-based pressure-sensitive adhesive agent (6) in a thickness after photopolymerization of 280 $\mu$m, and then the resulting layer including the pressure-sensitive adhesive agent was covered with a polyethylene terephthalate film (Diafoil MRN 38 made by Mitsubishi Kagaku Polyester Film Kabushiki Kaisha, thickness: 38 $\mu$m), which had been subjected to peeling-off treatment, to form a laminated sheet. The resulting sheet was photopolymerized by using a metal halide lamp to give a pressure-sensitive adhesive sheet.

Comparative Example 2

(Preparation of adhesive agent solution)

To the monomer syrup (A), 0.1 parts by weight of trimethylolpropane triacrylate and 1 part by weight of acrylic acid based on 100 parts by weight of the monomer syrup (A) were added, and the mixture was stirred at ordinary temperature (25°C) for 15 minutes to prepare a photopolymerizable pressure-sensitive adhesive agent (7).

(Formation of pressure-sensitive adhesive sheet)

A polyethylene terephthalate film (Lumiror T60 made by Toray Industries, Inc., thickness: 75 $\mu$m) was coated with the photopolymerizable acryl-based pressure-sensitive adhesive agent (7) in a thickness after photopolymerization of 280 $\mu$m, and then the resulting layer including the pressure-sensitive adhesive agent was covered with a polyethylene terephthalate film (Diafoil MRN 38 made by Mitsubishi Kagaku Polyester Film Kabushiki Kaisha, thickness: 38 $\mu$m), which had been subjected to peeling-off treatment, to form a laminated sheet. The resulting sheet was photopolymerized by using a metal halide lamp to give a pressure-sensitive adhesive sheet.

With respect to the pressure-sensitive adhesive sheets obtained in Examples and Comparative Examples as above, property evaluation (a thickness, adhesive strength, gel fraction of the adhesive agent layer) and fingerprint-taking evaluation (fingerprint-taking property, tracking performance to unevenness and heat resistance) were measured and evaluated as mentioned below. Subsequently, total evaluations as the sheet for identification were made. The criteria for total evaluation are as follows:

A case where all of the physical evaluation and the fingerprint-taking evaluation are accepted: o
A case where all of the physical evaluation and the fingerprint-taking evaluation are not accepted: $\times$

<Measurement of thickness of pressure-sensitive adhesive agent layer>

The thickness of a pressure-sensitive adhesive agent layer was measured by using a 1/1000 a dial gauge.

<Measurement of adhesive strength>

As a test piece, an SUS 304 steel plate defined in JIS G 4305, which was fully ground with a #360 waterproof sandpaper defined in JIS R 6253 in a long direction, was used. The surface of the test piece was washed with toluene before the test, and was thoroughly dried. After that, a sample to be measured, which was cut into a size of 20 mm (width) $\times$ 100 mm, was crimped to the test piece at a speed of 300 mm/minute, using a 2 kg roller. An adhesive strength was measured using a tensile testing machine in accordance with a 180° peeling method with 300 mm/minute peeling speed, after 30 minutes from finish of crimping.

<Evaluation A for fingerprint-taking (clearness and workability)>

As a test piece, an SUS 304 steel plate defined in JIS G 4305, which was fully ground with a #360 waterproof sandpaper defined in JIS R 6253 in a long direction, was used. The test piece was washed with toluene before the test, and fingers were intentionally pushed on the washed surface (surface from which fingerprints were taken), whereby fingerprints remained. The surface was coated with aluminum powder to visualize the fingerprints. A pressure-sensitive adhesive side of a pressure-sensitive adhesive sheet sample, which was cut into a size of 20 mm $\times$ 40 mm, was applied to the area where the fingerprints were visualized, the back side of the sheet was pressed with fingers, then the pressure-sensitive adhesive sheet sample was peeled off, and the trace of the fingerprints transferred on the pressure-sensitive adhesive agent layer was observed with eyes and the clearness was evaluated. Also, the workability upon taking fingerprints (application tendency and peeling off tendency) was evaluated. Each of the criteria is as follows:

(Clearness)

A case where fingerprints could be clearly taken: o
A case where a sheet was out of position and thus fingerprints could not be taken: $\times$
A case where a coated surface (surface from which fingerprints were taken) was broken and thus fingerprints could not taken: $\times$

(Workability)

A case where fingerprints could be observed with eyes without any troubles: o
A case where a sheet was out of position when it was pressed with fingers: $\times$
A case where it is difficult to peel off the sheet, because a sheet adhered too strongly: $\times$

<Evaluation B for fingerprint-taking (clearness and workability)>

The same evaluation and judgment were made as in Evaluation A for fingerprint-taking mentioned above, except that an old coated surface was used as the surface from which fingerprints were taken. The criteria are the same as in Evaluation A for fingerprint-taking.

<Evaluation C for fingerprint-taking (clearness and workability)>

A bottom of an empty can was washed with ethyl acetate, and fingers were intentionally pushed on the washed surface, whereby fingerprints remained. The area where the fingerprints remained was coated with a solution for taking fingerprints, which was obtained by mixing tri-iron tetroxide power 95 parts by weight and a non-ionic surfactant (Emulgen 130 K made by Kao Corporation) 5 parts by weight and diluting the resulting mixture with distilled with to a 3% solution, using a brush, then it was washed with water to visualize the fingerprints. The bottom was wetted with water, and a pressure-sensitive adhesive side of a pressure-sensitive adhesive sheet sample, which was cut into a size of 20 mm $\times$ 40 mm, was applied to the wetted part, and the back side of the sheet was pressed with fingers. After that, the pressure-sensitive adhesive sheet sample was peeled off, and the trace of the fingerprints transferred on the pressure-sensitive adhesive agent layer was observed visually and the clearness was evaluated. Also, the workability upon taking fingerprints (application tendency and peeling off tendency) was evaluated. The criteria are the same as in Evaluation A for fingerprint-taking.

<Evaluation of tracking performance to unevenness>

A backside of a 100 yen coin was washed with ethyl acetate, and fingers were intentionally pushed on the washed surface, whereby fingerprints remained. The area where the fingerprints remained was coated with aluminum powder using a brush to visualize the fingerprints. A pressure-sensitive adhesive side of a pressure-sensitive adhesive sheet sample, which was cut into a size of 30 mm $\times$ 30 mm, was applied to the area where the fingerprints were visualized. After the back side of the sheet was pressed with fingers, the pressure-sensitive adhesive sheet was peeled off, and the recess part of the 100 yen coin transferred on the pressure-sensitive adhesive agent layer was observed visually and evaluated the taking conditions.

<Evaluation of heat resistance>

The stainless steel plate on which the fingerprints were visualized in Evaluation A for fingerprint-taking was heated in a dryer having a temperature of 120˚C for 1 hour or more, and a pressure-sensitive adhesive sheet was applied thereto to take the fingerprints. This test was performed assuming a bonnet of a car in summer.

A case where fingerprints could be clearly taken: o
A case where a sheet was out of position, and thus fingerprints could not be taken: $\times$
A case where a coated surface (a surface from which fingerprints were taken) was broken, and thus fingerprints could not be taken: $\times$

<Gel fraction>

A gel fraction was obtained by weighing precisely about 1 g of a pressure-sensitive adhesive agent composition, immersing it in about 40 g of ethyl acetate for 7 days, then recovering all of insoluble matter in ethyl acetate, drying it at 130˚C for 2 hours, measuring its weight, and substituting the obtained weight into the following formula to calculate. Insoluble content (gel fraction) (% by weight) = (Weight of insoluble content /Weight of adhesive agent composition before immersing) $\times$ 100

The results are shown in Table 1.

Table 1

| | Thickness of pressure-sensitive adhesive layer [μm] | Adhesive strength [N/20 mm] | Gel fraction (%) [%] | Evaluation A for fingerprint-taking | | Evaluation B for fingerprint-taking | | Evaluation C for fingerprint-taking | | Tracking performance to unevenness | Heat resistance |
|---|---|---|---|---|---|---|---|---|---|---|---|
| | | | | clearness | Workability | clearness | Workability | clearness | Workability | | |
| Example 1 | 280 | 0.4 | 90 | ○ | ○ | ○ | ○ | ○ | ○ | ○ | ○ |
| Example 2 | 280 | 0.8 | 90 | ○ | ○ | ○ | ○ | ○ | ○ | ○ | ○ |
| Example 3 | 280 | 1.9 | 85 | ○ | ○ | ○ | ○ | ○ | ○ | ○ | ○ |
| Example 4 | 280 | 1.9 | 88 | ○ | ○ | ○ | ○ | ○ | ○ | ○ | ○ |
| Example 5 | 280 | 1.6 | 59 | ○ | ○ | ○ | ○ | ○ | ○ | ○ | ○ |
| Comparative Example 1 | 280 | 3.5 | 80 | ○ | × | × | × | ○ | × | ○ | ○ |
| Comparative Example 2 | 280 | 1.9 | 48 | ○ | ○ | ○ | ○ | ○ | ○ | ○ | × |

As clear from the results shown in Table 1, when the pressure-sensitive adhesive sheets produced by the present invention were used (Examples 1 to 5), in all Examples, the sheets could be well-balanced between the property evaluation (the thickness and the adhesive strength) and the fingerprint-taking evaluation (the fingerprint-taking property, the tracking performance to unevenness and the heat resistance). Consequently, it is apparent that when the pressure-sensitive adhesive sheet for identification and the production method thereof are used, the thick film coating for the pressure-sensitive adhesive agent layer can be easily performed, the sheet can be used even if the surface of the collection subject is wet with moisture, and damages on the surface of a collection subject can be reduced.

The 180˚ peeling adhesive strengths of the sheets of the invention in Example 1 to 5 were within a range of 0.1 to 2.0 N/20 mm at a peeling speed of 300 m/minute, and therefore it can be recognized that they are particularly suitable as the pressure-sensitive adhesive sheet for identification.

The object of the invention is to provide a pressure-sensitive adhesive sheet for identification, which is obtained by easy thick film coating in formation of a pressure-sensitive adhesive agent layer; which can be used even if the surface of a collection subject is wet with moisture; which is obtained without using an organic solvent in production steps; and which causes few damages on the surface of the collection subject, and a production method thereof. There is provided a pressure-sensitive adhesive sheet for identification which is used by transferring and taking a trace visualized onto a surface of a pressure-sensitive adhesive agent layer, the pressure-sensitive adhesive agent layer being formed by photoirradiation of a layer made of an acryl-based pressure-sensitive adhesive agent composition containing a) a (meth) acrylic acid alkyl ester in which an alkyl group has 1 to 14 carbon atoms on average, as a main monomer, b) a polyfunctional (meth)acrylate and c) a photoinitiator, the pressure-sensitive adhesive agent layer having a gel fraction of 50% by weight or more, the pressure-sensitive adhesive agent layer having an adhesive strength to a stainless steel plate of 0.1 to 2.0 N/20 mm.

## Claims

1. A pressure-sensitive adhesive sheet for identification which is used by transferring and taking a trace visualized onto a surface of a pressure-sensitive adhesive agent layer,
   the pressure-sensitive adhesive agent layer being formed by photoirradiation of a layer made of an acryl-based pressure-sensitive adhesive agent composition comprising a) a (meth)acrylic acid alkyl ester in which an alkyl group has 1 to 14 carbon atoms on average, as a main monomer, b) a polyfunctional (meth)acrylate and c) a photoinitiator, the pressure-sensitive adhesive agent layer having a gel fraction of 50% by weight or more, the pressure-sensitive adhesive agent layer having an adhesive strength to a stainless steel plate of 0.1 to 2.0 N/20 mm.

2. The pressure-sensitive adhesive sheet for identification according to claim 1, wherein, in the all monomers of the acryl-based pressure-sensitive adhesive agent composition, an amount of d) a polar group-containing monomer is less than 4.5 parts by weight based on 100 parts by weight of a) the (meth)acrylic acid alkyl ester in which the alkyl group has 1 to 14 carbon atoms on average as a main monomer.

3. The pressure-sensitive adhesive sheet for identification according to claim 1 or 2, wherein the pressure-sensitive adhesive agent layer has a thickness of 50 to 500 μm.

4. The pressure-sensitive adhesive sheet for identification according to any one of claims 1 to 3, wherein a target to be transferred is a tri-iron tetroxide fine powder adhering to the trace.

5. A method for producing a pressure-sensitive adhesive sheet for identification which is used by transferring and taking a trace visualized onto a surface of a pressure-sensitive adhesive agent layer, comprising the steps of:

   forming on a substrate a layer made of an acryl-based pressure-sensitive adhesive agent composition comprising a) a (meth)acrylic acid alkyl ester in which an alkyl group has 1 to 14 carbon atoms on average, as a main monomer, b) a polyfunctional (meth)acrylate and c) a photoinitiator; and
   performing photoirradiation of the layer comprising the acryl-based pressure-sensitive adhesive agent composition.

6. The method for producing a pressure-sensitive adhesive sheet for identification according to claim 5, wherein, in the whole monomers of the acryl-based pressure-sensitive adhesive agent composition, an amount of d) a polar group-containing monomer is less than 4.5 parts by weight based on 100 parts by weight of a) the (meth)acrylic acid alkyl ester in which the alkyl group has 1 to 14 carbon atoms on average as a main monomer.

7. The method for producing a pressure-sensitive adhesive sheet for identification according to claim 5 or 6, wherein the pressure-sensitive adhesive agent layer has a thickness of 50 to 500 $\mu$m.

8. The method for producing a pressure-sensitive adhesive sheet for identification according to any one of claims 5 to 7, wherein a target to be transferred is a tri-iron tetroxide fine powder adhering to the trace.

[FIG.1]

10 substrate

20 pressure-sensitive adhesive agent layer

31 plastic sheet

32 paper sheet     } 30 base material

**European Patent Office**

## EUROPEAN SEARCH REPORT

Application Number

EP 08 15 8030

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 714 029 A (UEMURA GOSEI [JP] ET AL) 3 February 1998 (1998-02-03) * abstract * * column 2, line 57 - column 4, line 12 * * column 4, line 64 - column 5, line 22; claim 1; examples * ----- | 1-8 | INV. C09J7/02 A61B5/117 C09J133/06 |
| X | EP 0 157 508 A (NITTO ELECTRIC IND CO [JP]) 9 October 1985 (1985-10-09) * abstract * * page 6, line 1 - page 9, line 3 * * page 11, line 16 - page 12, line 19; claims 1-3,5,6,9-13,15,17; examples * ----- | 1-8 | |
| Y,D | DATABASE WPI Week 199120 Thomson Scientific, London, GB; AN 1991-144598 XP002495093 -& JP 03 080833 A (SHINKO KAGAKU KOGYO KK) 5 April 1991 (1991-04-05) * abstract * ----- | 1-8 | |
| Y | US 4 706 600 A (MASON JR STANLEY I [US] ET AL) 17 November 1987 (1987-11-17) * abstract * * column 2, line 30 - column 3, line 35; figures 2,6 * ----- | 1-8 | TECHNICAL FIELDS SEARCHED (IPC) C09J A61B |

The present search report has been drawn up for all claims

| Place of search | Date of completion of the search | Examiner |
|---|---|---|
| Munich | 9 September 2008 | Meier, Stefan |

EPO FORM 1503 03.82 (P04C01)

**ANNEX TO THE EUROPEAN SEARCH REPORT
ON EUROPEAN PATENT APPLICATION NO.**                    EP 08 15 8030

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2008

| Patent document cited in search report | | Publication date | Patent family member(s) | | Publication date |
|---|---|---|---|---|---|
| US 5714029 | A | 03-02-1998 | NONE | | |
| EP 0157508 | A | 09-10-1985 | DE | 3586329 D1 | 20-08-1992 |
| | | | DE | 3586329 T2 | 10-12-1992 |
| | | | JP | 1940230 C | 09-06-1995 |
| | | | JP | 6016524 B | 02-03-1994 |
| | | | JP | 60196956 A | 05-10-1985 |
| JP 3080833 | A | 05-04-1991 | NONE | | |
| US 4706600 | A | 17-11-1987 | CA | 1287490 C | 13-08-1991 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001040299 A
- JP 2002194302 A
- JP 2002200060 A
- JP 2003089776 A
- JP 2000083929 A
- JP HEI975329 B
- JP 2004187859 A
- JP HEI380833 B